# EUROPÄISCHE PATENTSCHRIFT

(11) **EP 2 631 608 B1**
(45) Veröffentlichungstag und Bekanntmachung des Hinweises auf die Patenterteilung: **19.10.2016**
(21) Anmeldenummer: 12193527.4
(22) Anmeldetag: 21.11.2012
(51) Int. Cl.: G01D 11/24, G01D 5/347

(54) **Drehgeber**
Rotary encoder
Encodeur

(30) Priorität: 22.02.2012 DE 102012202683
(43) Veröffentlichungstag der Anmeldung: 28.08.2013
(73) Patentinhaber: Dr. Johannes Heidenhain GmbH, 83301 Traunreut (DE)
(72) Erfinder: Riepertinger, Sebastian, 83139 Söchtenau (DE)

(56) Entgegenhaltungen:
- EP-A2- 2 088 399
- WO-A2-2008/146213
- DE-T5-112006 001 393
- JP-A- 2001 008 404

## Beschreibung

Die Erfindung betrifft einen Drehgeber mit einem Gehäuse gemäß dem Patentanspruch 1.

Drehgeber dienen zur Messung von Drehbewegungen eines drehbar gelagerten Körpers, insbesondere einer Welle, über eine oder mehrere Umdrehungen. Die Drehbewegung wird dabei inkremental oder absolut erfasst. In Verbindung mit Zahnstangen und Zahnrädern oder mit Gewindespindeln lassen sich mit einem Drehgeber auch lineare Bewegungen messen.

Drehgeber werden in großer Zahl als so genannte Motor-Feed-Back-Einrichtungen verwendet und dienen in dieser Anwendung zur Bildung von Positions- bzw. Winkelinformationen, die für die Kommutierung von Elektroantrieben herangezogen werden. Beispielsweise wird bei Synchronmotoren sofort nach dem Einschalten der Versorgungsspannung eine Information über die absolute Rotorposition benötigt. Dafür eignen sich die Drehgeber mit zusätzlichen Kommutierungssignalen - sie liefern eine relativ grobe Positionsinformation - und die absoluten Drehgeber in Single- oder Multiturn-Ausführung, die sofort die exakte Winkelposition mit wenigen Winkelsekunden Genauigkeit ausgeben.

Derartige Drehgeber werden häufig in großen Stückzahlen hergestellt und verbaut. Umso wichtiger ist es, dass diese Geräte wirtschaftlich herstellbar und einfach zu montieren sind, beispielsweise an Elektromotoren.

Aus der EP 1 102 964 B1 der Anmelderin ist ein Drehgeber bekannt, welcher in einer hohlzylindrischen Ausnehmung eines Elektromotors klemmend befestigbar ist.

Weiterhin ist aus der EP 2 088 399 A2 der Anmelderin eine Winkelmesseinrichtung bekannt, die eine Kappe und einen Grundkörper aufweist, wobei die Kappe den Grundkörper über ihren Umfang hinweg umschließt und durch eine Pressverbindung am Grundkörper befestigt ist.

Der Erfindung liegt die Aufgabe zugrunde, einen Drehgeber der eingangs genannten Art zu schaffen, der mit einfachen Mitteln herstellbar und anbaubar ist und durch den eine vergleichsweise hohe Messgenauigkeit erreichbar ist.

Diese Aufgabe wird erfindungsgemäß durch die Schaffung eines Drehgebers mit den Merkmalen des Patentanspruchs 1 gelöst.

Demnach umfasst der erfindungsgemäße Drehgeber ein Gehäuse und eine Welle, die eine (Längs-) Achse aufweist. An dieser Welle ist eine Teilscheibe drehfest festgelegt. Die Welle ist, insbesondere durch präzise gefertigte Anschlagflächen, zum positionsgenauen Anbau an ein erstes Maschinenteil ausgebildet. Am Gehäuse ist weiterhin eine Abtasteinrichtung zur Abtastung der Teilscheibe festgelegt. Das Gehäuse ist so ausgestaltet, dass eine Außenfläche bzw. Anschlagfläche einen in Radialrichtung positionsgenauen starren Anschlag an ein zweites Maschinenteil bildet. Das Gehäuse umfasst zudem einen Gehäusekörper und einen Deckel, wobei der Gehäusekörper und der Deckel durch eine Pressfügung miteinander verbunden sind und das Gehäuse ein mechanisch nachgiebiges Element aufweist, welches infolge der Pressfügung verformt ist.

Die Teilscheibe kann eine inkrementale oder absolute Codierung tragen, wobei die Abtastung insbesondere auf einem induktiven Messprinzip basieren kann.

Gemäß einer Weiterbildung der Erfindung ist die Pressfügung unter relativer Bewegung des Deckels zum Gehäusekörper in einer Richtung parallel zur Achse vornehmbar. Demzufolge kann in diesem Fall die Pressfügung gemäß einem Längspressverband ausgestaltet sein, so dass also der Deckel unter Axialkraft in den Gehäusekörper gepresst wird. In weiterer Ausgestaltung der Erfindung wird der Deckel zur Begrenzung der axialen Bewegung am Ende des Fügevorgangs gegen einen Absatz im Gehäusekörper gedrückt.

Mit Vorteil ist das nachgiebige Element am Gehäusekörper angeformt. Somit kann das nachgiebige Element ein integraler Bestandteil des einstückigen Gehäusekörpers sein. Insbesondere kann das Element durch eine spanabhebende Bearbeitung aus der Wandung des Gehäusekörpers herausgearbeitet sein. Das nachgiebige Element ist dann aus dem gleichen Material wie der Gehäusekörper. In diesem Zusammenhang kann mit Vorteil als Material eine Aluminiumlegierung gewählt werden.

Mit Vorteil kann das Gehäuse mehrere Elemente aufweisen, die in Umfangsrichtung versetzt angeordnet sind.

Vorteilhaft kann es sein, wenn das Element als in Umfangsrichtung umlaufender Steg ausgestaltet ist. Der Steg kann gegebenenfalls unterbrochen sein, so dass ein Steg mit mehreren Unterbrechungen vorliegt bzw. mehrere Stege.

Der Drehgeber kann so ausgestaltet sein, dass das Element infolge der Pressfügung in Axialrichtung und / oder in Radialrichtung verformt ist. Insbesondere kann das Element infolge der Pressfügung plastisch verformt sein.

Die erfindungsgemäße Bauweise ist insbesondere vorteilhaft, wenn der Drehgeber lagerlos ausgestaltet ist. Das heißt, dass im Drehgeber selbst kein Wälz- oder Gleitlager angeordnet ist, das die Funktion einer mechanischen Lagerung zur relativen Drehbarkeit der Welle gegenüber dem Gehäuse erfüllen könnte. Vielmehr wird dann eine Festlegung der radialen und axialen Relativposition zwischen Gehäuse und Welle durch den positionsgenauen Anbau der Welle am ersten Maschinenteil und den positionsgenauen Anbau des Gehäuses am zweiten Maschinenteil erreicht. Das erste und zweite Maschinenteil sind naturgemäß zueinander drehbar angeordnet. Infolgedessen kann der Drehgeber mit Vorteil so ausgestaltet sein, dass die Welle starr am ersten Maschinenteil und das Gehäuse des Drehgebers starr am zweiten Maschinenteil festlegbar sind. Mit anderen Worten wird hier auf eine Ausgleichskupplung verzichtet, die üblicherweise dazu eingesetzt wird um entweder die Welle oder das Gehäuse axial und radial elastisch aber drehsteif mit dem ersten bzw. zweiten Maschinenteil zu verbinden. Der betreffende Drehgeber ist also mit Vorteil kupplungslos gebaut.

In Weiterbildung der Erfindung ist die Welle zum positionsgenauen Anbau an ein erstes Maschinenteil mit einer konischen Fläche ausgebildet.

Zusätzliche vorteilhafte Ausgestaltungen der Erfindung sind den abhängigen Ansprüchen zu entnehmen.

Weitere Merkmale und Vorteile der Erfindung werden bei der nachfolgenden Beschreibung eines Ausführungsbeispiels anhand der Figuren deutlich werden.

Es zeigen:
- Figur 1: eine Schnitt-Ansicht eines Drehgebers,
- Figur 2a: einen Detailansicht des Gehäuses des Drehgeber vor dem Pressfügen,
- Figur 2b: einen Detailansicht des Gehäuses des Drehgeber nach dem Pressfügen,
- Figur 3: eine Schnitt-Ansicht des Drehgebers an einer Maschine montiert,
- Figur 4: eine Draufsicht auf den Drehgeber an einer Maschine montiert.

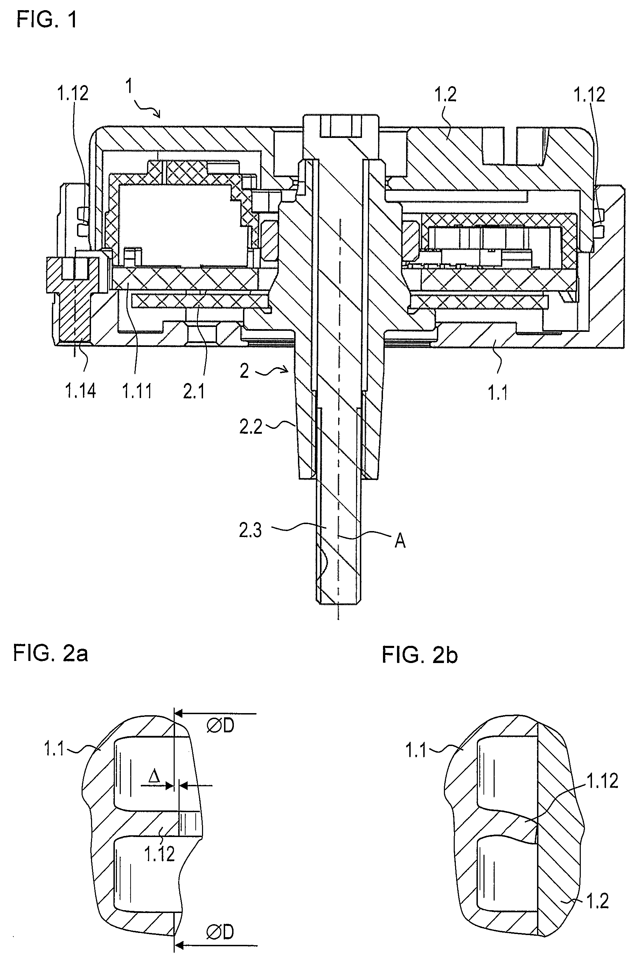

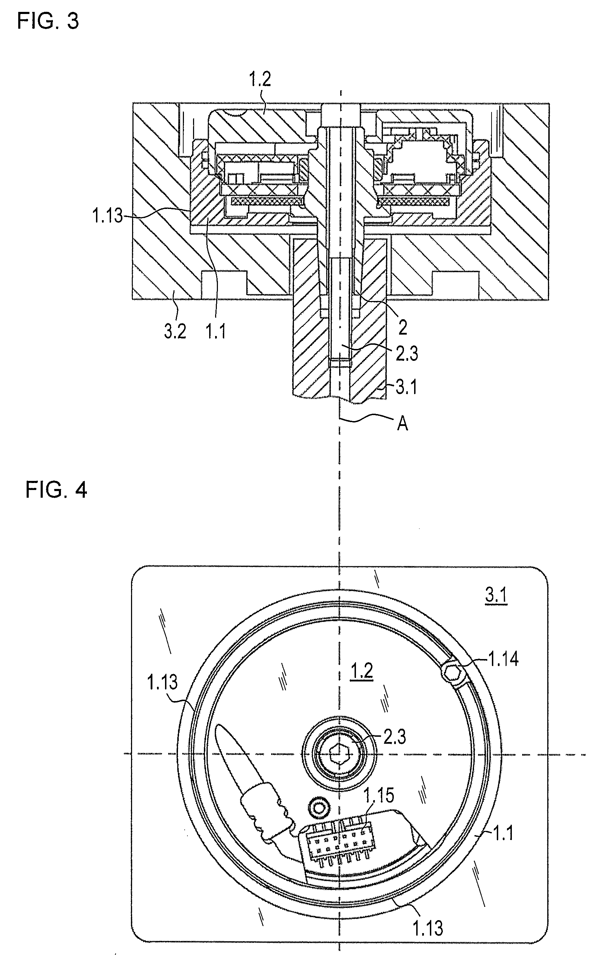

Gemäß der Figur 1 umfasst der Drehgeber ein Gehäuse 1 und eine Welle 2, die eine Längsachse bzw. Achse A aufweist. Das Gehäuse 1 weist einen vergleichsweise massiven und steifen Gehäusekörper 1.1. auf, der in erster Näherung eine zylindrische Außenkontur bezogen auf die Achse A hat und im vorgestellten Ausführungsbeispiel aus einem Aluminiumwerkstoff hergestellt ist. Am Gehäusekörper 1.1 ist ein exzentrisch drehbarer Klemmbolzen 1.14 angeordnet. Weiterhin weist der Gehäusekörper 1.1 in einem Bereich mit einem vergleichsweise dickwandigen Querschnitt eine präzise gefertigte Außenfläche 1.13 auf (siehe Figuren 3, 4). Beispielsweise darf im gezeigten Ausführungsbeispiel die jeweilige Außenfläche 1.13 nur mit einem Untermaß von 0,03 mm und einem Übermaß von 0,02 mm vom angebenden Außenmaß (hier 64,97 mm) abweichen. Am Gehäusekörper 1.1 ist weiterhin innenseitig eine Abtasteinrichtung 1.11 fixiert bzw. festgelegt. Im vorliegenden Ausführungsbeispiel beruht der Drehgeber auf einem induktiven Messprinzip. Infolgedessen ist hier die Abtasteinrichtung 1.11 als eine Leiterplatte mit Sende- und Empfängerleiterbahnen ausgestaltet, wobei auf der Leiterplatte zudem noch elektronische Bausteine zum Betrieb der Sendeleiterbahnen und zur Signalverarbeitung montiert sind. Auf der Leiterplatte ist weiterhin ein Steckverbinder 1.15 montiert zur Herstellung einer Steckverbindung zu einem Kabel, das zur Stromversorgung des Drehgebers und Signalübertragung an eine Folgeelektronik dient.

Insbesondere zu seiner Öffnung hin weist der Gehäusekörper 1.1 innen eine im Wesentlichen hohlzylindrische Kontur auf. In diese Innenfläche werden zwei umlaufende Nuten spanabhebend eingearbeitet, so dass ein umlaufender dünner Steg 1.12 entsteht. Der Steg 1.12 dient wie unten beschrieben wird, als nachgiebiges Element. Danach werden die Innenflächen beidseits der Nuten soweit bearbeitet bis in diesem Bereich innen ein Durchmesser ØD vorliegt. Die Innenfläche des Stegs 1.12 ragt in den im Wesentlichen hohlzylindrischen Raum des Gehäusekörpers 1.1 mit dem Überstand Δ hinein (siehe Figur 2a).

Der Drehgeber umfasst zudem die Welle 2, die zentral in den Gehäusekörper 1.1 eingelegt ist und an der eine Teilscheibe 2.1 drehfest festgelegt ist. Diese besteht aus einem Substrat, welches im dargestellten Ausführungsbeispiel aus Epoxydharz hergestellt ist, und auf welchem zwei Teilungsspuren angeordnet sind. Die Teilscheibe 2.1 ist im bestimmungsgemäßen Betrieb des Drehgebers um die Achse A drehbar und wird im gezeigten Beispiel induktiv von der Abtasteinrichtung 1.11 abgetastet. Die Teilungsspuren sind kreisförmig ausgebildet und bezüglich der Achse A konzentrisch mit unterschiedlichen Durchmessern auf dem Substrat angeordnet. Die beiden Teilungsspuren bestehen jeweils aus einer periodischen Abfolge von alternierend angeordneten elektrisch leitfähigen Teilungsbereichen und nichtleitfähigen Teilungsbereichen. Als Material für die elektrisch leitfähigen Teilbereiche wurde im gezeigten Beispiel Kupfer auf das Substrat aufgebracht. In den nichtleitfähigen Teilungsbereichen wurde das Substrat dagegen nicht beschichtet.

Die Welle 2 weist eine präzise gefertigte Außenfläche 2.2 auf. Im vorgestellten Ausführungsbeispiel ist die Außenfläche 2.2 konisch ausgestaltet. Die Welle 2 ist nicht am Gehäuse 1 gelagert, somit liegt hier ein lagerloser Drehgeber vor.

Als weiteres Bauteil umfasst das Gehäuse 1 einen Deckel 1.2. Im gezeigten Ausführungsbeispiel ist dieser kappenförmig ausgestaltet und kann in den Innenraum des Gehäusekörpers 1.1 eingeführt werden.

Der Deckel 1.2 weist eine im Wesentlichen zylindrische Außenfläche auf, so dass als die umlaufende Außenfläche als Mantelfläche eines Zylinders aufgefasst werden kann. Der maximale äußere Durchmesser der Außenfläche ist kleiner oder gleich dem oben beschriebenen inneren Durchmesser ØD des Gehäusekörpers 1.1 im entsprechenden Einführbereich. Demzufolge wird beim Zusammenfügen des Deckels 1.2 und des Gehäusekörpers 1.1 der Deckel 1.2 zunächst praktisch kraftfrei eingeführt bis die Außenfläche des Deckels 1.2 unter axialer Vorschubbewegung den Steg 1.12 erreicht, welcher mit dem radialen Überstand Δ in den Gehäusekörper 1.1 hinein ragt. Bei weiterem axialen Bewegen des Deckels 1.2 relativ zum Gehäusekörper 1.1 wird der nachgiebige umlaufende Steg 1.12 verformt bis schließlich der Deckel 1.2 an einem Absatz des Gehäusekörpers 1.1 ansteht und der Steg 1.12 gemäß der Figur 2b plastisch deformiert ist. Der Deckel 1.2 ist somit mittels Pressfügung, hier im Sinne eines Längspressverbands, mit dem Gehäusekörper 1.1 verbunden.

Zur Zentrierung des Gehäuses 1 bildet die Außenfläche 1.13 einen in Radialrichtung positionsgenauen starren Anschlag an ein zweites Maschinenteil 3.2. In demjenigen Querschnitt (also einer Ebene, welche von der Achse A orthogonal durchstoßen wird), in welchem der starre Anschlag gebildet wird ist die Wandstärke des Gehäusekörpers 1.1 größer als in jenem Querschnitt, in dem das elastische Element 1.12 angeordnet ist. Aufgrund der Nachgiebigkeit des Stegs 1.12 ist keine Veränderung de Außenmaße im Bereich der Außenflächen 1.13 des Gehäusekörpers 1.1 erkennbar, obwohl hier Genauigkeiten im Bereich von 1/100 mm gefordert sind.

Durch das infolge der Pressfügung geschlossene Gehäuse 1 werden die innen liegenden Bauteile des Drehgebers, insbesondere die Abtasteinrichtung 1.11 und die Teilscheibe 2.1, gegen äußere Einflüsse geschützt.

Im vorgestellten Ausführungsbeispiel dient der Drehgeber zur Erzeugung von Kommutierungssignalen für einen Elektromotor, an den der Drehgeber geklemmt werden kann. Der Elektromotor weist gemäß der Figur 3 als erstes Maschinenteil 3.1 eine Motorwelle auf und als zweites Maschinenteil 3.2 ein Statorgehäuse. Somit ist das erste Maschinenteil 3.1 relativ zum zweiten Maschinenteil 3.2 drehbar angeordnet. Das als Motorwelle ausgestaltete erste Maschinenteil 3.1 weist ein Innengewinde und eine konische Bohrung auf. Das zweite Maschinenteil 3.2 weist eine hohlzylindrische Ausnehmung auf. Sowohl diese Ausnehmung als auch die konische Bohrung müssen überaus präzise gefertigt sein.

Im Zuge des Anbaus des lagerlosen Drehgebers an eine Maschine, also beispielsweise an einen Elektromotor, wird zunächst mit Hilfe einer zentralen Schraube 2.3 die Welle 2 am ersten Maschinenteil 3.1 (Motorwelle) drehfest und positionsgenau fixiert. Danach wird der exzentrische Klemmbolzen 1.14 betätigt, so dass die Außenflächen 1.13 des Gehäuses 1 an die Wandung der Ausnehmung im zweiten Maschinenteil (Statorgehäuse) gedrängt werden. Durch die überaus geringen Toleranzen sind hier kaum Verschiebungen feststellbar. Das Gehäuses 1 und damit auch die Abtasteinrichtung 1.11 ist somit positionsgenau an das zweite Maschinenteil 3.2 angebaut. Zu beachten ist hier auch, dass der Drehgeber keine Ausgleichkupplung aufweist, welche häufig verwendet wird, um einen Versatz zwischen der Welle 2 und dem ersten Maschinenteil 3.1 elastisch zu kompensieren. Hier kann auf eine derartige Ausgleichskupplung verzichtet werden.

Zur Herstellung einer elektrischen Verbindung zwischen dem Drehgeber und einer Folgeelektronik kann das Kabel zugentlastend in eine entsprechend ausgeformte Mulde (siehe Figur 4) des Deckels 1.2 eingelegt und das Kabelende mit Steckverbinder 1.15 zusammengefügt werden.

## Patentansprüche

1. Drehgeber umfassend ein Gehäuse (1) und eine Welle (2), die eine Achse (A) aufweist, wobei
- an der Welle (2) eine Teilscheibe (2.1) drehfest festgelegt ist und die Welle (2) zum positionsgenauen Anbau an ein erstes Maschinenteil (3.1) ausgebildet ist, und weiterhin
- am Gehäuse (1) eine Abtasteinrichtung (1.11) zur Abtastung der Teilscheibe (2.1) festgelegt ist, wobei das Gehäuse (1) so ausgestaltet ist, dass eine Außenfläche (1.13) einen in Radialrichtung positionsgenauen starren Anschlag an ein zweites Maschinenteil (3.2) bildet, wobei
das Gehäuse (1) einen Gehäusekörper (1.1) und einen Deckel (1.2) umfasst, wobei der Gehäusekörper (1.1) und der Deckel (1.2) durch eine Pressfügung miteinander verbunden sind,
**dadurch gekennzeichnet, dass** das Gehäuse (1) ein mechanisch nachgiebiges Element (1.12) aufweist, welches als in Umfangsrichtung umlaufender Steg ausgestaltet ist und infolge der Pressfügung, welche unter relativer Bewegung des Deckels (1.2) zum Gehäusekörper (1.1) in einer Richtung parallel zur Achse (A) vornehmbar ist, verformt ist.

2. Drehgeber gemäß dem Anspruch 1 **dadurch gekennzeichnet, dass** das Element (1.12) am Gehäusekörper (1.1) angeformt ist.

3. Drehgeber gemäß einem der vorhergehenden Ansprüche, **dadurch gekennzeichnet, dass** das Gehäuse (1) mehrere Elemente (1.12) aufweist, die in Umfangsrichtung versetzt angeordnet sind.

4. Drehgeber gemäß einem der vorhergehenden Ansprüche, **dadurch gekennzeichnet, dass** das Element (1.12) infolge der Pressfügung in Axialrichtung verformt ist.

5. Drehgeber gemäß einem der vorhergehenden Ansprüche, **dadurch gekennzeichnet, dass** das Element (1.12) infolge der Pressfügung plastisch verformt ist.

6. Drehgeber gemäß einem der vorhergehenden Ansprüche, **dadurch gekennzeichnet, dass** der Drehgeber lagerlos ausgestaltet ist.

7. Drehgeber gemäß einem der vorhergehenden Ansprüche, **dadurch gekennzeichnet, dass** der Drehgeber so ausgestaltet ist, dass die Welle (2) starr am ersten Maschinenteil (3.1) festlegbar sind.

8. Drehgeber gemäß einem der vorhergehenden Ansprüche, **dadurch gekennzeichnet, dass** die Welle (2) zum positionsgenauen Anbau an ein erstes Maschinenteil (3.1) mit einer konischen Fläche (2.2) ausgebildet ist.

## Claims

1. Rotary encoder comprising a housing (1) and a shaft (2) which has an axis (A), wherein
- a graduated disc (2.1) is attached in a rotationally fixed manner to the shaft (2), and the shaft (2) is designed to be fitted to a first machine part (3.1) in a precise position, and furthermore
- a scanning device (1.11) for scanning the graduated disc (2.1) is attached to the housing (1), wherein the housing (1) is configured such that an outer surface (1.13) forms a rigid stop against a second machine part (3.2) in a precise position in the radial direction, wherein
the housing (1) comprises a housing body (1.1) and a cover (1.2), wherein the housing body (1.1) and the cover (1.2) are connected to one another by a press fit,
**characterized in that** the housing (1) has a mechanically flexible element (1.12) which is configured as a web which runs in the circumferential direction and is deformed owing to the press fit which can be performed in a direction parallel to the axis (A) with relative movement of the cover (1.2) in relation to the housing body (1.1).

2. Rotary encoder according to Claim 1, **characterized in that** the element (1.12) is integrally formed on the housing body (1.1).

3. Rotary encoder according to either of the preceding claims, **characterized in that** the housing (1) has a plurality of elements (1.12) which are arranged offset in the circumferential direction.

4. Rotary encoder according to one of the preceding claims, **characterized in that** the element (1.12) is deformed in the axial direction owing to the press fit.

5. Rotary encoder according to one of the preceding claims, **characterized in that** the element (1.12) is plastically deformed owing the press fit.

6. Rotary encoder according to one of the preceding claims, **characterized in that** the rotary encoder is configured without bearings.

7. Rotary encoder according to one of the preceding claims, **characterized in that** the rotary encoder is configured such that the shaft (2) can be attached to the first machine part (3.1) in a rigid manner.

8. Rotary encoder according to one of the preceding claims, **characterized in that** the shaft (2) is designed to be fitted to a first machine part (3.1) in a precise position by way of a conical surface (2.2).

## Revendications

1. Encodeur rotatif comprenant un boîtier (1) et un arbre (2), qui présente un axe (A), dans lequel
- un plateau diviseur (2.1) est fixé de façon solidaire en rotation sur l'arbre (2) et l'arbre (2) est réalisé pour un montage en position précise sur une première partie de machine (3.1), et en outre
- un dispositif de balayage (1.11) est fixé sur le boîtier (1) pour le balayage du plateau diviseur (2.1), dans lequel le boîtier (1) est configuré de telle manière qu'une face extérieure (1.13) forme une butée rigide en position précise en direction radiale sur une deuxième partie de machine (3.2), dans lequel le boîtier (1) comprend un corps de boîtier (1.1) et un couvercle (1.2), dans lequel le corps de boîtier (1.1) et le couvercle (1.2) sont assemblés l'un à l'autre par un ajustage serré,
**caractérisé en ce que** le boîtier (1) présente un élément mécaniquement déformable (1.12), qui est réalisé sous la forme d'une nervure circonférentielle en direction périphérique et qui est déformé à la suite de l'ajustage serré, qui peut être opéré sous un mouvement relatif du couvercle (1.2) par rapport au corps de boîtier (1.1) dans une direction parallèle à l'axe (A).

2. Encodeur rotatif selon la revendication 1, **caractérisé en ce que** l'élément (1.12) est formé sur le corps de boîtier (1.1).

3. Encodeur rotatif selon l'une quelconque des revendications précédentes, **caractérisé en ce que** le boîtier (1) présente plusieurs éléments (1.12), qui sont disposés de façon décalée en direction périphérique.

4. Encodeur rotatif selon l'une quelconque des revendications précédentes, **caractérisé en ce que** l'élément (1.12) est déformé en direction axiale par suite de l'ajustage serré.

5. Encodeur rotatif selon l'une quelconque des revendications précédentes, **caractérisé en ce que** l'élément (1.12) est déformé plastiquement par suite de l'ajustage serré.

6. Encodeur rotatif selon l'une quelconque des revendications précédentes, **caractérisé en ce que** l'encodeur rotatif est réalisé sans palier.

7. Encodeur rotatif selon l'une quelconque des revendications précédentes, **caractérisé en ce que** l'encodeur rotatif est configuré de telle manière que l'arbre (2) puisse être fixé de façon rigide à la première partie de machine (3.1).

8. Encodeur rotatif selon l'une quelconque des revendications précédentes, **caractérisé en ce que** l'arbre (2) est réalisé avec une surface conique (2.2) en vue du montage en position précise sur une première partie de machine (3.1).
